# EUROPEAN PATENT SPECIFICATION

(11) **EP 2 104 303 B1**
(45) Date of publication and mention of the grant of the patent: **14.12.2011**
(21) Application number: 07846014.4
(22) Date of filing: 25.12.2007
(51) Int. Cl.: H04L 29/06

(54) **METHOD, DEVICE AND SYSTEM FOR THE INITIATOR AND THE RECEIVER DISMANTLING THE CALL**
VERFAHREN, EINRICHTUNG UND SYSTEM FÜR DEN INITIATOR UND DEN EMPFÄNGER, WODURCH DIE VERBINDUNG ABGEBAUT WIRD
PROCÉDÉ, DISPOSITIF ET SYSTÈME POUR L'INITIATEUR ET LE RÉCEPTEUR DÉMANTELANT L'APPEL

(30) Priority: 10.01.2007 CN 200710000655
(43) Date of publication of application: 23.09.2009
(73) Proprietor: Huawei Technologies Co., Ltd., Longgang District, Shenzhen Guangdong 518129 (CN)
(72) Inventor: TAN, Shiyong, Shenzhen Guangdong 518129 (CN)
(74) Representative: Epping - Hermann - Fischer
(86) International application number: PCT/CN2007/003796
(87) International publication number: WO 2008/083555

(56) References cited:
- CN-A- 1 286 556
- CN-A- 1 836 434
- CN-A- 1 852 578
- US-A1- 2006 233 176
- US-B1- 6 731 625
- 'Terminal for Low Bit-Rate Multimedia Communication' ITU-T H.324 30 September 2005, pages 21 - 23-24, XP007900297

## Description

### FIELD OF THE TECHNOLOGY

The present invention relates to the field of communication technology, and more particularly to a method, a device, and a system for an initiator and a receiver to dismantle a call.

### BACKGROUND OF THE INVENTION

The *Terminal for Low Bit-Rate Multimedia Communication* (H.324) protocol is a standard adopted by an ITU Telecommunication Standardization Sector (ITU-T) for defining the low rate multimedia communication terminals, in which the main part of the protocol defines a specification for multimedia terminals applicable to the public switched telephone network (PSTN).

Based on the above H.324 protocol, an H.324 terminal can simultaneously transmit audio, video, and data media streams in a call and utilize a signaling of the in-band control protocol for multimedia communication (H.245) to control the opening, the closing, and the encoding/decoding type of various media streams.

The H.324 terminal may further interwork with various multimedia communication systems, including, but not limited to, session initial protocol (SIP) network (such as SIP network and IP multimedia subsystem (IMS) network in the fixed network), and H.323 network. When the H.324 terminal interworks with another multimedia communication system, a call between the H.324 terminal and an interworking node follows the specification in the H.324 protocol (the H.324 call herein not only includes a call between H.324 terminals, but also includes the part between the H.324 terminal and the interworking node in the whole call channel when the H.324 terminal interworks with another multimedia communication system).

The flow of the H.324 call dismantling process is introduced below:

1. The flow of an initiator in the H.324 call dismantling process is described below:

The initiator of the H.324 call dismantling process may be an H.324 terminal, or an interworking node (for example, a user as the other party of the interworking hangs up, thereby triggering the interworking node to initiate an H.324 call dismantling).

(1) When the H.324 call dismantling is needed, after sending a complete image, the initiator stops sending all the video media streams associated with the call, and closes a logical channel of the video media stream.

The closing of the H.245 logical channel (i.e., the logical channel of the video media stream) includes: the initiator sends a CloseLogicalChannel (CLC) message to a peer end, and receives a CloseLogicalChannelAck (CLC ACK) message responded by the peer end.

(2) The initiator stops sending all the audio and data media streams associated with the call, and close all the logical channels for transmitting audio and data media streams (step (2) may be incorporated into step (1)).

The closing of H.245 logical channels (i.e., all the logical channels for transmitting audio and data media streams) includes: the initiator sends a CLC message to the peer end, and receives a CLC ACK message responded by the peer end.

(3) When all the logical channels for transmitting media streams are closed, the initiator sends an EndSessionCommand (ESC) message to the peer end.

(4) The initiator sends a call dismantling signaling to a network device, and releases associated media resources.

2. The flow of a receiver in the H.324 call dismantling process is described below:

The receiver of the H.324 call dismantling process may be an H.324 terminal or an interworking node.

(1) In response to the logical channel closing process initiated by the initiator of the call dismantling process, the receiver returns the CLC ACK message to the initiator.

(2) After receiving the ESC message, the receiver sends the ESC message to the peer end (this step is optional).

(3) The receiver receives the call dismantling signaling forwarded from the network device, dismantles a call according to the call dismantling flow of a signaling plane, and releases the associated media resource.

When researching the present invention, the inventor (s) found that the current H.324 call dismantling process requires a rather long time.
"Terminal for Low Bit-Rate Multimedia Communication" (ITU-T H.324, 30 September 2005) is a standard adopted by an ITU Telecommunication Standardization Sector (ITU-T) for defining the low rate multimedia communication terminals, in which the main part of the protocol defines a specification for multimedia terminals applicable to the public switched telephone network (PSTN) and an H.324 terminal can simultaneously transmit audio, video, and data media streams in a call and utilize a signaling of the in-band control protocol for multimedia communication (H.245) to control the opening, the closing, and the encoding/decoding type of various media streams.
Patent Document (US 6731625B1) discloses a callback system which is created utilizing a hybrid telecommunication system including a switched communication network and a packet transmission network. A call parameter database is stored in a memory. A call is received on the system. The call parameter database is accessed to determine at least one call parameter. The call is routed over the switched communication network and the packet transmission network based on the at least one call parameter. A plurality of service engines is provided, each configured to execute desired service logic utilizing expert system.
Patent Document (US 2006/233176A1) discloses a method and communications network for optimally interworking an IP network with a PISN employing the QSIG Call Diversion and Single Step Call Transfer supplementary services.

### SUMMARY OF THE INVENTION

In an embodiment, the present invention is directed to a method, a device, and a system for an initiator and a receiver to dismantle a call, so as to reduce the time required for dismantling a call.

The method for an initiator to dismantle an H.324 call according to an embodiment of the present invention includes the following steps: when the H.324 call dismantling is needed, the initiator stops sending a media stream to the receiver and sends a call dismantling signaling to a CS network without performing an in-band H.245 message interaction, so as to dismantle the H.324 call and release the associated media resource.

The method for a receiver to dismantle an H.324 call according to an embodiment of the present invention includes the following steps: when receiving the call dismantling signaling from the CS network, the receiver stops sending a media stream to the initiator and sends the call dismantling signaling to the CS network without performing an in-band H. 245 message interaction, so as to dismantle the H.324 call and release the associated media resource.

An initiator device for dismantling an H.324 call according to an embodiment of the present invention includes a control unit, a media stream stopping unit, and a media resource releasing unit. The control unit is adapted to instruct the media stream stopping unit to stop sending a media stream to a peer end when the H.324 call dismantling is needed, send a call dismantling signaling to a CS network without performing an in-band H.245 message interaction to dismantle the H.324 call, and trigger the media resource releasing unit to release a media resource. The media stream stopping unit is adapted to stop sending the media stream to the peer end. The media resource releasing unit is adapted to release the associated media resource.

A receiver device for dismantling an H. 324 call according to an embodiment of the present invention includes: a control unit, a media stream stopping unit, and a media resource releasing unit. The control unit is adapted to instruct the media stream stopping unit to stop sending a media stream to a peer end when receiving

a call dismantling signaling from a CS network, send a call dismantling signaling to the CS network without performing an in-band H.245 message interaction to dismantle the H.324 call, and trigger the media resource releasing unit to release a media resource. The media stream stopping unit is adapted to stop sending the media stream to the peer end. The media resource releasing unit is adapted to release the associated media resource.

The system for dismantling an H.324 call according to an embodiment of the present invention includes an initiator device and a receiver device. The initiator device is adapted to stop sending a media stream to the receiver device when the H.324 call dismantling is needed and send a call dismantling signaling to a CS network without performing an in-band H. 245 message interaction, so as to dismantle the H.324 call and release associated media resource. The receiver device is adapted to stop sending a media stream to the initiator device when receiving the call dismantling signaling from the CS network and send a call dismantling signaling to the CS network without performing an in-band H.245 message interaction, so as to dismantle the H.324 call and release the associated media resource.

In the embodiments of the present invention, the in-band H.245 message interaction step performed in the H.324 call dismantling process in the prior art is omitted, i.e., when the call dismantling is needed, the initiator stops sending a media stream to the receiver, and sends a call dismantling signaling to the network side via a signaling plane, so as to dismantle the call and release the associated media resource. The operations of the receiver are substantially the same as that of the initiator. Once receiving the call dismantling signaling from the network

side, the receiver stops sending a media stream to the initiator and sends a call dismantling signaling to the network side via a signaling plane, so as to dismantle the call and release the associated media resource.

Therefore, the embodiments of the present invention can shorten the time required for the call dismantling process.

### BRIEF DESCRIPTION OF THE DRAWINGS

The present invention will become better understood from the detailed description given herein below for illustration only, and thus is not limitative of the present invention, and wherein:

FIG. 1 is a flow chart of a method for an initiator to dismantle a call according to an embodiment of the present invention;

FIG. 2 is a flow chart of a method for a receiver to dismantle a call according to an embodiment of the present invention;

FIG. 3 is a flow chart of a signaling according to the method embodiment of the present invention;

FIG. 4 is a schematic structural view of an initiator device for dismantling a call according to an embodiment of the present invention;

FIG. 5 is a schematic structural view of a receiver device for dismantling a call according to an embodiment of the present invention; and

FIG. 6 is a schematic structural view of a system for dismantling a call according to an embodiment of the present invention.

### DETAILED DESCRIPTION OF THE EMBODIMENTS

Based on the problems in the prior art, the long delay of the H.324 call dismantling process is mainly caused by an in-band H.245 message interaction, and the signaling plane is disconnected after the closing of the logical channel, and the in-band H.245 message interaction required during the closing of the logical channel consumes a rather long time, thereby resulting in the inaccurate billing.

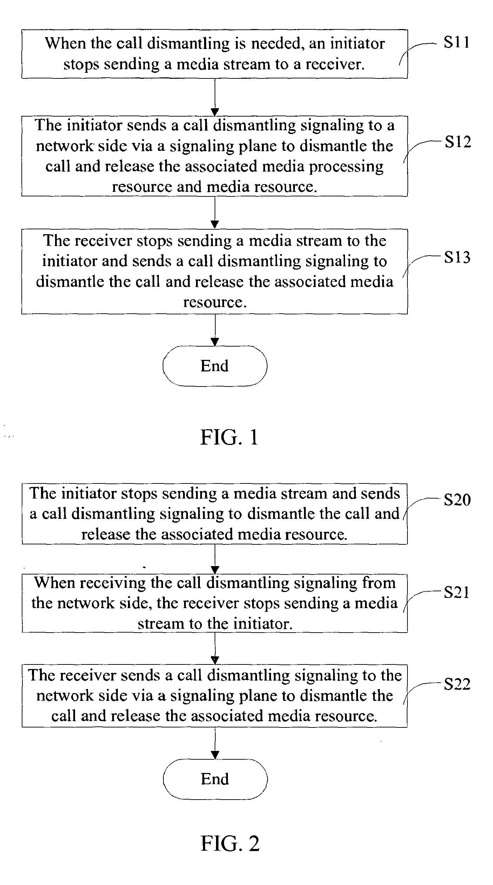

In order to shorten the dismantling delay in the H.324 call dismantling process, the present invention provides a method for an initiator to dismantle a call in an embodiment. Referring to FIG. 1, the method includes the following main steps.

In step S11, when the call dismantling is needed, an initiator stops sending a media stream to a receiver.

The initiator in the H.324 call dismantling process may be an H.324 terminal or an interworking node. When an H.324 terminal hangs up, the H.324 terminal initiates the H.324 call dismantling process as the initiator, and the receiver is an H.324 terminal or an interworking node. When the peer end of the H.324 terminal in the interworking hangs up, the interworking node initiates the H.324 call dismantling process as the initiator, and the receiver is the H.324 terminal.

The initiator directly stops sending the media stream to the receiver. To further ensure the user experience of the receiver, the initiator may stop sending the media stream to the receiver immediately after sending out a whole image in a previous frame, in which the media stream includes at least one of (the media stream mentioned below refers to the same meaning) a video media stream, an audio media stream, and a data media stream.

In step S12, the initiator sends a call dismantling signaling to a network side via a signaling plane to dismantle the call and release associated media resource.

The initiator sends the call dismantling signaling to the network side via the signaling plane, and relevant network elements of the network side cooperatively complete the interaction of the call dismantling signaling between the initiator and the receiver, so as to dismantle the call between the initiator and the receiver and release the associated media resource (the media resource refers to any resource occupied by the media transmission and media processing, including, but not limited to, a codec, echo cancellation unit, time division multiplex (TDM) slot, IP endpoint, asynchronous transfer mode (ATM) endpoint, the media resource mentioned below refers to the same meaning). Because the associated media resource is released, the logical channel for transmitting the media stream has no physical conditions, and thus the logical channel no longer exists.

Furthermore, in step S12, after the initiator sends the call dismantling signaling to the network side via the signaling plane, the receiver performs the following operations to cooperatively complete the call dismantling operation and release the associated media resource.

In step S13, the receiver also does not perform the in-band H.245 message interaction, stops sending a media stream to the initiator and sends a call dismantling signaling to the network device, so as to dismantle the call and release the associated media resource (i.e., a combination of the method for the initiator to dismantle the call and the method for the receiver to dismantle the call according to the embodiment of the present invention).

Once receiving the call dismantling signaling from the network device, the receiver may directly stop sending a media stream to the initiator. Furthermore, in order to ensure the user experience of the initiator, the receiver may stop sending the media stream to the initiator immediately after sending the whole image in the previous frame. Then, the receiver sends the call dismantling signaling to the network side via the signaling plane, so that the relevant network elements of the network side cooperatively complete the interaction of the call dismantling signaling between the initiator and the receiver to dismantle the call between the initiator and the receiver and release the associated media resource. Because the associated media resource is released, the logical channel for transmitting the media stream has no physical conditions, and thus the logical channel no longer exists.

In an embodiment of the present invention, a method for a receiver to dismantle the call is further provided. Referring to FIG. 2, the method mainly includes the following steps.

In step S21, once receiving the call dismantling signaling from the network side, the receiver stops sending a media stream to the initiator.

The receiver in the H.324 call dismantling process may be an H.324 terminal or an interworking node.

Once receiving the call dismantling signaling, the receiver may directly stop sending the media stream to the initiator. Furthermore, in order to ensure the user experience of the initiator, the receiver may stop sending the media stream to the initiator immediately after sending the whole image in the previous frame, in which the media stream includes at least one of (the media stream mentioned below refers to the same meaning): video media stream, audio media stream, and data media stream.

In step S22, the receiver sends a call dismantling signaling to the network side via a signaling plane to dismantle the call and release the associated media resource.

The receiver sends the call dismantling signaling to the network side via the signaling plane, and the relevant network elements of the network side cooperatively complete the interaction of the call dismantling signaling between the initiator and the receiver, so as to dismantle the call between the initiator and the receiver and release the associated media resource (the media resource refers to any resource occupied by the media transmission and media processing, including, but not limited to, a codec, echo cancellation unit, TDM slot, IP endpoint, and ATM endpoint, and the media resource mentioned below refers to the same meaning). Because the associated media resource is released, the logical channel for transmitting the media stream has no physical conditions, and thus the logical channel no longer exists.

Furthermore, before the receiver receives the call dismantling signaling from the network side in step S21, the initiator performs the following operations to cooperatively complete the call dismantling operation and release the associated media resource.

In step S20, the initiator does not perform the in-band H.245 message interaction, stops sending a media stream to the receiver and sends a call dismantling signaling to dismantle the call and release the associated media resource (i.e., a combination of the method for the initiator to dismantle the call and the method for the receiver to dismantle the call according to the embodiment of the present invention).

When the call dismantling is needed, the initiator may directly stop sending the media stream to the receiver. Furthermore, in order to ensure the user experience of the receiver, the initiator may stop sending the media stream to the receiver immediately after sending the whole image in the previous frame. Then, the initiator sends the call dismantling signaling to the network side via the signaling plane, and the relevant network elements of the network side cooperatively complete the interaction of the call dismantling signaling between the initiator and the receiver to dismantle the call between the initiator and the receiver and release the associated media resource. Because the associated media resource is released, the logical channel for transmitting the media stream has no physical conditions, and thus the logical channel no longer exists.

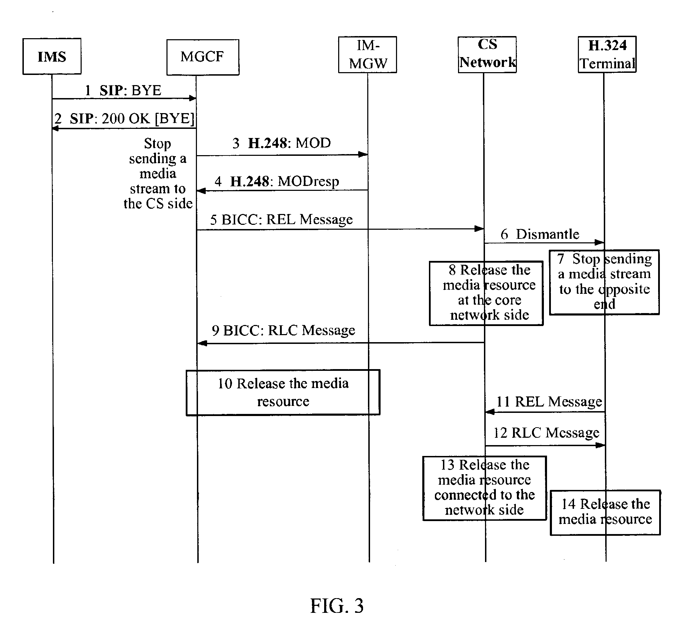

A method embodiment of combining the method for the initiator to dismantle the call and the method for the receiver to dismantle the call according to the embodiment of the present invention is provided below. Taking the multimedia interworking between a 3GPP IMS domain and a circuit switched (CS) domain for example, the IMS domain signaling is an SIP, the CS domain signaling is a bearer independent call control (BICC), and an interworking node is formed by a media gateway control function (MGCF) and an IP multimedia media gateway (IM-MGW) under separated architectures, in which an H.248 protocol is adopted between the MGCF and the IM-MGW. It is assumed that the call dismantling operation is initiated by a user at the IMS side, and in this case, an H.324 call dismantling is initiated by the interworking node (MGCF+IM-MGW). Referring to FIG. 3, the following specific steps are included:

Step 1: The IMS side initiates a call dismantling operation, and an MGCF receives a BYE message sent from the IMS side.

Step 2: The MGCF responds 200 OK [BYE] to the IMS side.

Step 3: The MGCF instructs the IM-MGW to stop sending a media stream to the CS side by an MOD command of the H.248 protocol.

Step 4: The IM-MGW stops sending the media stream to the CS side, and makes a response to the MOD command delivered by the MGCF.

Step 5: The MGCF sends a release (REL) message to the CS side, and instructs the CS side to dismantle the call.

Step 6: After receiving the REL message, the CS network sends a disconnect message to the H.324 terminal to instruct about the disconnection.

Step 7: After receiving the disconnect message, the H.324 terminal stops sending a media stream to the peer end.

Step 8: The CS network releases the media resource at the core network side.

Step 9: The CS network sends a release complete (RLC) message to the IMS side to indicate that the call dismantling at the core network side has been completed.

Step 10: The MGCF instructs the IM-MGW to release the associated media resource.

Step 11: The H.324 terminal sends the REL message to the CS network for dismantling the call.

Step 12: The CS network sends the RLC message to the H.324 terminal to indicate that the call dismantling has been completed.

Step 13: The CS network releases the media resource connected to the network side.

Step: The H.324 terminal releases the media resource.

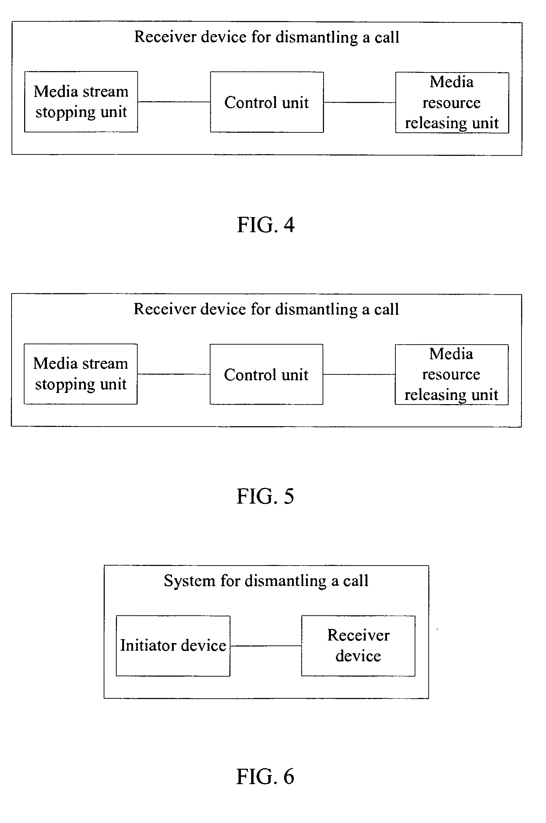

Corresponding to the method for the initiator to dismantle the call according to the embodiment of the present invention, an initiator device for dismantling a call is provided in an embodiment of the present invention. When an H.324 terminal hangs up, the initiator device is the H.324 terminal, and when a peer end of the H.324 terminal in the interworking hangs up, the initiator device is an interworking node. Referring to FIG. 4, the initiator device includes a control unit, a media stream stopping unit, and a media resource releasing unit connected to the control unit.

The control unit is adapted to instruct the media stream stopping unit to stop sending a media stream to a peer end when the call dismantling is needed, send a call dismantling signaling to a network side via a signaling plane to dismantle the call, and trigger the media resource releasing unit to release media resource.

The media stream stopping unit is adapted to stop sending the media stream to the peer end.

The media resource releasing unit is adapted to release the associated media resource.

Corresponding to the method for the receiver to dismantle a call according to the embodiment of the present invention, a receiver device for dismantling a call is provided in an embodiment of the present invention. The receiver device may be an H.324 terminal or an interworking node. Referring to FIG.5, the receiver device includes a control unit, a media stream stopping unit, and a media resource releasing unit connected to the control unit.

The control unit is adapted to instruct the media stream stopping unit to stop sending a media stream to a peer end when receiving the call dismantling signaling from the network side, send a call dismantling signaling to the network side via a signaling plane to dismantle the call, and trigger the media resource releasing unit to release media resource.

The media stream stopping unit is adapted to stop sending the media stream to the peer end.

The media resource releasing unit is adapted to release the associated media resource.

By combining the above initiator device and receiver device, a system for dismantling a call is further provided in an embodiment of the present invention. Referring to FIG. 6, the system includes an initiator device and a receiver device interconnected to each other. When an H.324 terminal hangs up, the initiator device is the H.324 terminal, and the receiver device is an H.324 terminal or an interworking node; when a peer end of the H.324 terminal in the interworking hangs up, the initiator device is the interworking node, and the receiver device is the H.324 terminal.

The initiator device is adapted to stop sending a media stream to the receiver device when the call dismantling is needed, and send a call dismantling signaling to the network side via a signaling plane to dismantle the call and release associated media resource.

The receiver device is adapted to stop sending a media stream to the initiator device when receiving the call dismantling signaling from the network side, and send a call dismantling signaling to the network side via a signaling plane to dismantle the call and release the associated media resource.

Accordingly, because the logical channel relies on the media resource, the logical channel is released spontaneously as the media resource is released during the call dismantling process. Taking an interworking node for example, when the time division multiplex (TDM) bearer manner is employed, the logical channel relies on the TDM slot. As the TDM slot is restored during the call dismantling process, the logical channel on the slot is released spontaneously, so that the embodiments of the present invention and the prior art achieve the same effects in releasing the logical channel.

In addition, the embodiments of the present invention omit the in-band H.245 message interaction step required for performing the H.324 call dismantling in the prior art, and stops sending the media stream without interacting any message with the peer end, which can be completed locally (as for the interworking node with the separated architecture, the MGC instructs the MG to stop sending the media), and thus the present invention can save the time required by the call dismantling process comparing with the prior art. The embodiments of the present invention omit the in-band H.245 message interaction step required for performing the H.324 call dismantling in the prior art, which can not only stop sending the media stream immediately, but also release the media resource immediately to reduce the waste of media resources, thereby further avoiding the problem that the signaling plane is still connected during H.245 message interaction to result in additional billing.

It will be apparent to those skilled in the art that various modifications and variations can be made to the present invention without departing from the scope of the invention. In view of the foregoing, it is intended that the present invention cover modifications and variations of this invention provided they fall within the scope of the following claims and their equivalents.

## Claims

1. A method for an initiator to dismantle a call, comprising:
Stopping (S11), by an initiator, sending a media stream to a receiver when an H.324 call dismantling is needed;
**characterized in that**
sending (S12), by the initiator, a call dismantling signaling to a circuit switched, CS, network without performing an in-band H.245 message interaction, so as to dismantle the H.324 call and release an associated media resource.

2. The method according to claim 1, wherein after the initiator sends the call dismantling signaling to the CS network without performing the in-band H.245 message interaction, the method further comprises:
stopping (S13), by the receiver, sending the media stream to the initiator when the receiver receives the call dismantling signaling; and
sending (S13), by the receiver, a call dismantling signaling to the CS network without performing the in-band H.245 message interaction, to dismantle the H. 324 call and release the associated media resource.

3. The method according to claim 1, wherein the method further comprises:
sending, by the initiator, a whole image in a previous frame before stopping sending the media stream to the receiver.

4. The method according to claim 2, wherein the method further comprises:
sending, by the receiver, a whole image in a previous frame before stopping sending the media stream to the initiator.

5. The method according to claim 1 or 2, wherein when an H.324 terminal hangs up, the H.324 terminal initiates an H.324 call dismantling process as the initiator, and the receiver is an H.324 terminal or an interworking node; when a peer end of the H.324 terminal in an interworking hangs up, the interworking node initiates the H.324 call dismantling process as the initiator, and the receiver is the H.324 terminal.

6. An initiator device for dismantling a call, comprising:
a media stream stopping unit, adapted to stop sending a media stream to a peer end; and
a media resource releasing unit, adapted to release an associated media resource;
**characterized in that**
a control unit, adapted to instruct the media stream stopping unit to stop sending the media stream to the peer end when an H.324 call dismantling is needed, send a call dismantling signaling to a circuit switched, CS, network without performing an in-band H. 245 message interaction to dismantle the H.324 call, and trigger the media resource releasing unit to release the media resource.

7. The initiator device according to claim 6, wherein when an H.324 terminal hangs up, the initiator device is the H.324 terminal; when a peer end of the H.324 terminal in an interworking hangs up, the initiator device is an interworking node.

8. A system for dismantling a call, comprising:
an initiator device, adapted to stop sending a media stream to a receiver device when an H.324 call dismantling is needed and send a call dismantling signaling to a circuit switched, CS, network without performing an in-band H.245 message interaction, so as to dismantle the H.324 call and release an associated media resource;
the receiver device, adapted to stop sending the media stream to the initiator device when receiving the call dismantling signaling from the CS network and send a call dismantling signaling to the CS network without performing the in-band H.245 message interaction, so as to dismantle the H.324 call and release the associated media resource.

9. The system according to claim 8, wherein when an H.324 terminal hangs up, the initiator device is the H.324 terminal and the receiver device is the H.324 terminal or an interworking node; when a peer end of the H.324 terminal in an interworking hangs up, the initiator device is the interworking node and the receiver device is the H.324 terminal.

## Patentansprüche

1. Verfahren für einen Initiator zum Abbauen eines Anrufs, mit den folgenden Schritten:
ein Initiator stoppt (S11) das Senden eines Medienstroms zu einem Empfänger, wenn ein H.324-Anrufabbau notwendig ist;
**dadurch gekennzeichnet, dass**
der Initiator eine Anrufabbausignalisierung zu einem leitungsvermittelten bzw. CS-Netz sendet (S 12), ohne eine Inband-H.245-Nachrichteninteraktion durchzuführen, um so den H.324-Anruf abzubauen und ein assoziiertes Medienbetriebsmittel freizugeben.

2. Verfahren nach Anspruch 1, wobei das Verfahren, nachdem der Initiator die Anrufabbausignalisierung zu dem CS-Netz sendet, ohne die Inband-H.245-Nachrichteninteraktion durchzuführen, ferner Folgendes umfasst:
der Empfänger stoppt (S 13) das Senden des Medienstroms zu dem Initiator, wenn der Empfänger die Anrufabbausignalisierung empfängt; und
der Empfänger sendet (S13) eine Anrufabbausignalisierung zu dem CS-Netz, ohne die Inband-H.245-Nachrichteninteraktion durchzuführen, um den H.324-Anruf abzubauen und das assoziierte Medienbetriebsmittel freizugeben.

3. Verfahren nach Anspruch 1, wobei das Verfahren ferner Folgendes umfasst:
der Initiator sendet ein ganzes Bild in einem vorherigen Frame vor dem Stoppen des Sendens des Medienstroms zu dem Empfänger.

4. Verfahren nach Anspruch 2, wobei das Verfahren ferner Folgendes umfasst:
der Empfänger sendet ein ganzes Bild in einem vorherigen Frame vor dem Stoppen des Sendens des Medienstroms zu dem Initiator.

5. Verfahren nach Anspruch 1 oder 2, wobei, wenn ein H.324-Endgerät einhängt, das H.324-Endgerät einen H.324-Anrufabbauprozess als der Initiator einleitet und der Empfänger ein H.324-Endgerät oder ein Interworking-Knoten ist; und wenn ein Peer-Ende des H.324-Endgeräts bei einem Interworking einhängt, der Interworking-Knoten den H.324-Anrufabbauprozess als der Initiator einleitet und der Empfänger das H.324-Endgerät ist.

6. Initiatoreinrichtung zum Abbauen eines Anrufs, umfassend:
eine Medienstrom-Stoppeinheit, die dafür ausgelegt ist, das Senden eines Medienstroms zu einem Peer-Ende zu stoppen; und
eine Medienbetriebsmittel-Freigabeeinheit, die dafür ausgelegt ist, ein assoziiertes Medienbetriebsmittel freizugeben;
**gekennzeichnet durch**
eine Steuereinheit, die dafür ausgelegt ist, die Medienstrom-Stoppeinheit anzuweisen, das Senden des Medienstroms zu dem Peer-Ende zu stoppen, wenn ein H.324-Anrufabbau notwendig ist, eine Anrufabbausignalisierung zu einem leitungsvermittelten bzw. CS-Netz zu senden, ohne eine Inband-H.245-Nachrichteninteraktion durchzuführen, um den H.324-Anruf abzubauen; und die Medienbetriebsmittel-Freigabeeinheit zu triggern, das Medienbetriebsmittel freizugeben.

7. Initiatoreinrichtung nach Anspruch 6, wobei, wenn ein H.324-Endgerät einhängt, die Initiatoreinrichtung das H.324-Endgerät ist; und wenn ein Peer-Ende des H.324-Endgeräts bei einem Interworking einhängt, die Initiatoreinrichtung ein Interworking-Knoten ist.

8. System zum Abbauen eines Anrufs, umfassend:
eine Initiatoreinrichtung, die dafür ausgelegt ist, das Senden eines Medienstroms zu einer Empfängereinrichtung zu stoppen, wenn ein H.324-Anrufabbau notwendig ist, und eine Anrufabbausignalisierung zu einem leitungsvermittelten bzw. CS-Netz zu senden, ohne eine Inband-H.245-Nachrichteninteraktion durchzuführen, um so den H.324-Anruf abzubauen und ein assoziiertes Medienbetriebsmittel freizugeben;
die Empfängereinrichtung, die dafür ausgelegt ist, das Senden des Medienstroms zu der Initiatoreinrichtung zu stoppen, wenn die Anrufabbausignalisierung von dem CS-Netz empfangen wird, und eine Anrufabbausignalisierung zu dem CS-Netz zu senden, ohne die Inband-H.245-Nachrichteninteraktion durchzuführen, um so den H.324-Anruf abzubauen und das assoziierte Medienbetriebsmittel freizugeben.

9. System nach Anspruch 8, wobei, wenn ein H.324-Endgerät einhängt, die Initiatoreinrichtung das H.324-Endgerät ist und die Empfängereinrichtung das H.324-Endgerät oder ein Interworking-Knoten ist; und wenn ein Peer-Ende des H.324-Endgeräts bei einem Interworking einhängt, die Initiatoreinrichtung der Interworking-Knoten ist und die Empfängereinrichtung das H.324-Endgerät ist.

## Revendications

1. Procédé destiné à un dispositif déclencheur pour défaire un appel, comprenant :
l'arrêt (S11), par un dispositif déclencheur, de l'envoi d'un flux multimédia vers un récepteur lorsque que le démantèlement d'un appel au protocole H.324 est nécessaire,
**caractérisé par**
l'envoi (S12), par le dispositif déclencheur, du signalement de démantèlement d'un appel à un réseau à circuits commutés, CS, sans effectuer d'interaction de messages au protocole H.245 dans la bande, de façon à défaire l'appel au protocole H.324 et à libérer une ressource multimédia associée.

2. Procédé selon la revendication 1, dans lequel, après que le dispositif déclencheur a envoyé le signalement de démantèlement de l'appel au réseau à circuits commutés CS sans effectuer d'interaction de messages au protocole H.245 dans la bande, le procédé comprend en outre :
l'arrêt (S13), par le récepteur, de l'envoi du flux multimédia vers le dispositif déclencheur lorsque le récepteur reçoit le signalement de démantèlement de l'appel, et
l'envoi (S13), par le récepteur, du signalement de démantèlement d'un appel au réseau à circuits commutés CS sans effectuer d'interaction de messages au protocole H.245 dans la bande afin de défaire l'appel au protocole H.324 et libérer la ressource multimédia associée.

3. Procédé selon la revendication 1, dans lequel le procédé comprend en outre :
l'envoi, par le dispositif déclencheur, d'une image complète se trouvant dans une trame précédente avant l'arrêt de l'envoi du flux multimédia au récepteur.

4. Procédé selon la revendication 2, dans lequel le procédé comprend en outre :
l'envoi, par le récepteur, d'une image complète se trouvant dans une trame précédente avant l'arrêt de l'envoi du flux multimédia au dispositif déclencheur.

5. Procédé selon la revendication 1 ou 2, dans lequel, lorsqu'un terminal au protocole H.324 raccroche, le terminal au protocole H.324 déclenche un processus de démantèlement d'un appel au protocole H.324 en tant que dispositif déclencheur, et le récepteur est un terminal au protocole H.324 ou un noeud d'interfonctionnement ;
lorsqu'une extrémité homologue du terminal au protocole H.324 dans un noeud d'interfonctionnement raccroche, le noeud d'interfonctionnement déclenche le processus de démantèlement de l'appel au protocole H.324 en tant que dispositif déclencheur, et le récepteur est le terminal au protocole H.324.

6. Dispositif déclencheur permettant de défaire un appel, comprenant :
une unité d'arrêt de flux multimédia, conçue pour arrêter l'envoi d'un flux multimédia vers une extrémité homologue, et
une unité de libération de ressource multimédia, conçue pour libérer une ressource multimédia associée,
**caractérisé en ce que**
une unité de commande, conçue pour ordonner à l'unité d'arrêt de flux multimédia d'arrêter l'envoi du flux multimédia vers l'extrémité homologue lorsqu'un démantèlement d'appel au protocole H.324 est nécessaire, envoie le signalement de démantèlement de l'appel à un réseau à circuits commutés, CS, sans effectuer d'interaction de messages au protocole H.245 dans la bande pour défaire l'appel au protocole H.324, et déclenche l'unité de libération de ressource multimédia pour libérer la ressource multimédia.

7. Dispositif déclencheur selon la revendication 6, dans lequel, lorsqu'un terminal au protocole H.324 raccroche, le dispositif déclencheur est le terminal au protocole H.324 ; lorsqu'une extrémité homologue du terminal au protocole H.324 dans un noeud d'interfonctionnement raccroche, le dispositif déclencheur est un noeud d'interfonctionnement.

8. Système permettant de défaire un appel, comprenant :
un dispositif déclencheur, conçu pour arrêter l'envoi d'un flux multimédia vers un dispositif récepteur lorsque le démantèlement d'un appel au protocole H.324 est nécessaire, et pour envoyer le signalement du démantèlement de l'appel à un réseau à paquet commutés, CS, sans effectuer d'interaction de messages au protocole H.245 dans la bande, de façon à défaire l'appel au protocole H.324 et à libérer une ressource multimédia associée,
le dispositif récepteur, conçu pour arrêter l'envoi du flux multimédia au dispositif déclencheur lorsqu'il reçoit le signalement du démantèlement d'un appel, en provenance du réseau à circuits commutés CS et pour envoyer un signalement de démantèlement de l'appel vers le réseau à circuits commutés CS, sans effectuer d'interaction de messages au protocole H.245 dans la bande, de façon à défaire l'appel au protocole H.324 et à libérer la ressource multimédia associée.

9. Système selon la revendication 8, dans lequel, lorsqu'un terminal au protocole H.324 raccroche, le dispositif déclencheur est le terminal au protocole H.324 et le dispositif récepteur est le terminal au protocole H.324 ou un noeud d'interfonctionnement ; lorsqu'une extrémité homologue du terminal au protocole H.324 dans un noeud d'interfonctionnement raccroche, le dispositif déclencheur est le noeud d'interfonctionnement et le dispositif récepteur est le terminal au protocole H.324.
